# EUROPÄISCHE PATENTSCHRIFT

(11) **EP 3 293 423 B1**
(45) Veröffentlichungstag und Bekanntmachung des Hinweises auf die Patenterteilung: **27.02.2019**
(21) Anmeldenummer: 17171936.2
(22) Anmeldetag: 19.05.2017
(51) Int. Cl.: F16H 57/12, B23D 47/00, B23D 47/08, B23Q 5/56

(54) **VORRICHTUNG ZUM DURCHTRENNEN VON WERKSTÜCKEN**
DEVICE FOR SEPARATING WORKPIECES
DISPOSITIF DESTINÉ À SECTIONNER DES PIÈCES

(30) Priorität: 08.09.2016 AT 507922016
(43) Veröffentlichungstag der Anmeldung: 14.03.2018
(73) Patentinhaber: Braun Maschinenfabrik GmbH, 4840 Vöcklabruck (AT)
(72) Erfinder: Ebner, Philipp, 4853 Steinbach am Attersee (AT); Purrer, Stefan, 4873 Frankenburg am Hausruck (AT)
(74) Vertreter: KLIMENT & HENHAPEL

(56) Entgegenhaltungen:
- EP-A1- 0 411 387
- DE-A1- 4 310 130
- DE-U1- 9 215 859
- US-A- 2 907 222

## Beschreibung

Die Erfindung bezieht sich auf eine Vorrichtung zum Durchtrennen von Werkstücken oder Bauteilen umfassend ein Getriebe mit einem ersten Getriebeeingang und einem Getriebeausgang, einen ersten Antrieb, der mit dem ersten Getriebeeingang verbunden ist, und einen mit dem Getriebeausgang verbundenen Abtrieb zur Übertragung einer Drehbewegung auf ein Trennwerkzeug, gemäß dem Oberbegriff von Anspruch 1.

Ein Getriebe der genannten Art wird etwa in der DE 9215859 U1 beschrieben. Im Stand der Technik werden unterschiedliche Trenntechnologien für unterschiedliche Zwecke und Materialien eingesetzt, darunter das Trennschleifen mittels Trennschleifscheibe und das Sägen mit einem Kreissägeblatt. Anwendungen dieser Technologien finden sich etwa in Stahlwerken oder ähnlichen Bereichen, wo ein breites Spektrum an Materialqualitäten auftritt und bearbeitet werden muss. So eignen sich beispielsweise manche Materialien wie etwa Stähle, Edelstähle oder andere Metalle besser zum Trennschleifen, andere Materialien wiederum - auch aus Kostengründen - besser zum Sägen. Aufgrund der unterschiedlichen Materialien müssen auch unterschiedliche Maschinen mit unterschiedlichen Trennwerkzeugen, Schnittgeschwindigkeiten, etc. verwendet und immer wieder ausgetauscht werden. Dies verursacht einen großen Aufwand, lange Warte- und Standzeiten und dadurch hohe Kosten.

Ziel der vorliegenden Erfindung besteht darin, eine Trennvorrichtung bereitzustellen, die diese Nachteile nicht aufweist und mittels derer die Umstellung von einer Trenntechnologie auf eine andere Trenntechnologie, z.B. vom Trennschleifen auf Sägen, wesentlich schneller und kostengünstiger erfolgen kann. Die Vorteile der einzelnen Trenntechnologien sollen dabei beibehalten werden.

Dieses Ziel wird mit einer eingangs erwähnten Trennvorrichtung dadurch erreicht, dass das Getriebe einen zweiten Getriebeeingang umfasst, der mit einem zweiten Antrieb verbunden ist, sowie eine Schalteinrichtung, die den Getriebeausgang in einer ersten Stellung mit dem ersten Getriebeeingang und in einer zweiten Stellung mit dem zweiten Getriebeeingang koppelt, wobei eine Spieleinstelleinrichtung zur Einstellung des Spiels in der Drehübertragung zwischen zumindest einem der Antriebe und dem Abtrieb vorgesehen ist.

Durch die Erfindung wird eine Hybrid-Trennvorrichtung geschaffen, die unterschiedliche Betriebsarten aufweist und damit unterschiedliche Trenntechnologien vereint. Die Trennvorrichtung besitzt einen gemeinsamen Abtrieb, d.h. der Abtrieb wird wahlweise durch den ersten oder zweiten Antrieb getrieben. Das Umrüsten von einem Trennverfahren (Sägen) zu einem anderen (Trennschleifen) ist besonders einfach. Durch die Schalteinrichtung wird der passende Antrieb bzw. der dazugehörige Getriebestrang zwischen dem jeweiligen Antrieb und der Schalteinrichtung ausgewählt. Zusätzlich wird allenfalls noch der Antriebsflansch gewechselt und eine Sägeblatteinheit eingehoben bzw. herausgehoben. Mit der Spieleinstelleinrichtung wird das erforderliche Spiel (spielfrei - nicht spielfrei) eingestellt. Es hat sich gezeigt, dass für unterschiedliche Trennverfahren nicht nur die Drehzahl und das Drehmoment ausschlaggebend sind, sondern auch das Spiel in der Drehübertragung zwischen dem jeweiligen Antrieb und dem Abtrieb bzw. Trennwerkzeug. Die Spieleinstelleinrichtung ermöglicht daher überhaupt erst die Integration unterschiedlicher Trennverfahren in ein und derselben Trennvorrichtung. Durch das veränderliche Spiel vorzugsweise zwischen Schalteinrichtung und Abtrieb kann u.a. die unterschiedliche Stoß- und Vibrationsanregung bei unterschiedlichen Trenntechnologien berücksichtigt werden.

Insbesondere beim Sägen kann die Standzeit des Trennwerkzeuges dadurch erhöht werden. Zudem wird verhindert, dass Stöße zu Schäden im Getriebe bzw. im Antrieb führen. Gleichzeitig wird gewährleistet, dass beim Sägen die erforderliche spielfreie Einstellung ermöglicht wird.

Die voneinander unabhängigen Antriebe (Motoren) können bereits für das jeweilige Trennverfahren ausgelegt sein, z.B. hinsichtlich Drehzahl, Drehmoment, Leistung, etc. In der ersten Stellung ist der erste Antrieb ausgewählt, während der zweite Antrieb vom gemeinsamen Abtrieb entkoppelt ist. In der zweiten Stellung ist der zweite Antrieb ausgewählt, während der erste Antrieb vom gemeinsamen Abtrieb entkoppelt ist.

Es ist bevorzugt, wenn gleichzeitig mit der Schalteinrichtung auch die Ölschmierung für das Getriebe geschaltet wird, d.h. es kann hier nur jener Antriebsstrang mit Öl versorgt werden, der gerade im Betrieb ist.

Die Erfindung ermöglicht daher auch die Integration zweier gänzlich verschiedener Trennverfahren wie dem Trennschleifen (mit einer Trennschleifscheibe) einerseits und dem Sägen (mit einem Kreissägeblatt) andererseits in einer Trennvorrichtung. Um nun von einem Trennverfahren zum anderen zu wechseln, ist lediglich die Schalteinrichtung in die jeweils andere Stellung zu bringen, das Trennwerkzeug auszuwechseln (d.h. die Trennschleifscheibe wird durch ein Kreissägeblatt ersetzt), wobei allenfalls noch der Antriebsflansch gewechselt und eine Sägeblatteinheit eingehoben bzw. herausgehoben werden muss, und die Spieleinstelleinrichtung entsprechend einzustellen.

Die Schalteinrichtung kann entweder automatisch oder händisch durch eine Bedienperson geschaltet werden. Gleiches gilt auch für die Spieleinstelleinrichtung, wobei das Spiel über ein Stellglied vorzugsweise kontinuierlich einstellbar ist.

Vorzugsweise wirkt die Spieleinstelleinrichtung auf die Getriebeausgangswelle, sodass das Spiel in der Drehübertragung zwischen der Getriebeausgangswelle und der der Getriebeausgangswelle in der Drehübertragung vorausgehenden Welle bzw. vorausgehendem Drehelement verändert wird. Auf diese Weise können Stöße und Vibrationen (insbesondere beim Sägen) nicht weiter ins Getriebeinnere übertragen werden.

Es hat sich gezeigt, dass beim (Kalt)Kreissägen niedrige Drehzahlen (ca. 25-60 U/min), hohe Momente (ca. 20.000 Nm) und ein spielfreies Getriebe besonders gute Ergebnisse liefern. Außerdem sollte das Sägeblatt gekühlt, geschmiert und vorteilhafterwiese seitlich geführt bzw. gedämpft werden. Hingegen sind beim Trennschleifen hohe Drehzahlen (ca. 1.200-3.000 U/min), niedrigere Momente, und ein nicht spielfreies Getriebe erforderlich. Außerdem sollte die Trennscheibe aufgrund der fortschreitenden Abnützung vermessen und nachgeregelt werden.

Eine bevorzugte Ausführungsform zeichnet sich in diesem Sinne dadurch aus, dass in einer ersten Betriebsart der Vorrichtung das Trennwerkzeug eine Kreissäge ist, die Schalteinrichtung sich in der ersten Stellung befindet und die Spieleinstelleinrichtung eine spielarme, vorzugsweise spielfreie Stellung einnimmt, und dass in einer zweiten Betriebsart der Vorrichtung das Trennwerkzeug eine Trennschleifscheibe ist, die Schalteinrichtung sich in der zweiten Stellung befindet und die Spieleinstelleinrichtung eine Stellung einnimmt, in der das Spiel größer ist als in der ersten Betriebsart. Das am Abtrieb bereitgestellte Drehmoment in der ersten Stellung der Schalteinrichtung kann beispielsweise zumindest 10.000 Nm, vorzugsweise zumindest 15.000 Nm, betragen, und in der zweiten Stellung der Schalteinrichtung höchstens 5000 Nm, vorzugsweise höchstens 3.000 Nm. So werden ideale Parameter für das Sägen (d.h. hohe Drehmomente) einerseits und das Trennschleifen (d.h. niedrige Drehmomente) andererseits erreicht.

Die Trennvorrichtung kann z.B. auf einer Plattform oder einem Ausleger bewegbar gelagert sein. Entsprechende Antriebe zum automatischen Verfahren der Trennvorrichtung während des Schneidens können vorgesehen werden.

Eine bevorzugte Ausführungsform zeichnet sich ferner dadurch aus, dass das Übersetzungsverhältnis zwischen dem ersten Antrieb und dem Abtrieb und das Übersetzungsverhältnis zwischen dem zweiten Antrieb und dem Abtrieb um einen Faktor von zumindest 10, vorzugsweise zumindest 20, voneinander verschieden sind. Dadurch kann der erforderliche Drehzahlunterschied zwischen den unterschiedlichen Trennverfahren (Trennschleifen und Sägen) erreicht werden. Beim Trennschleifen werden wesentlich höhere Drehzahlen verwendet.

In der praktischen Ausführung kann die Spieleinstelleinrichtung im Getriebe integriert sein, sodass sich eine kompakte und platzsparende Bauweise ergibt, die die wichtigsten Einstellmöglichkeiten in einer Getriebeeinheit vereint.

Eine bevorzugte Ausführungsform zeichnet sich ferner dadurch aus, dass zumindest zwei miteinander kämmende Zahnräder mit zueinander paralleler Drehachsen vorgesehen sind, wobei eines der Zahnräder relativ zum anderen Zahnrad axial verschiebbar ist, und die Spieleinstelleinrichtung ein Stellglied zur axialen Verschiebung eines der Zahnräder relativ zum anderen Zahnrad zur Einstellung des Spiels umfasst. Durch die relativ zueinander verschiebbare Anordnung der kämmenden Zahnräder kann das Spiel in der Drehübertragung auf besonders einfache Weise und bereits im Getriebe eingestellt werden. Die Verschiebung erfolgt vorzugsweise derart, dass die Welle, auf der das betreffende Zahnrad sitzt, axial verschoben wird. Eine bevorzugte Ausführungsform zeichnet sich insbesondere dadurch aus, dass die kämmenden Zahnräder jeweils eine konische Verzahnung aufweisen (Kegelstirnrad-Übertragung), oder dass zumindest eines der Zahnräder eine sich in axialer Richtung verändernde Verzahnung aufweist. Die Spieleinstellung erfolgt somit entweder durch konische Zustellung oder durch Verschiebung des Eingriffs in einen Verzahnungsbereich, der unterschiedliche geometrische Eigenschaften aufweist.

Eine bevorzugte Ausführungsform zeichnet sich dadurch aus, dass die Spieleinstelleinrichtung ein Stellglied aufweist, das vorzugsweise hydraulisch, pneumatisch, elektrisch, mechanisch oder elektro-mechanisch betätigbar ist. Dadurch kann das Spiel automatisch und reproduzierbar eingestellt werden.

Eine bevorzugte Ausführungsform zeichnet sich ferner dadurch aus, dass der Abtrieb mit einer Werkzeughalterung, vorzugsweise in Form eines Spannflansches, verbunden ist, und dass das von der Werkzeughalterung gehaltene Trennwerkzeug eine Kreissäge oder eine Trennschleifscheibe ist.

Vorzugsweise weist die Vorrichtung außerdem eine Kühl- und/oder Schmiereinrichtung auf, die als Einheit abnehmbar oder aus dem Arbeitsbereich bzw. von dem Trennwerkzeug der Vorrichtung wegbewegbar ist. Dies erleichtert das Umrüsten auf eine Trenntechnologie, die keine Kühlung bzw. Schmierung erfordert (Trennschleifen).

Im Folgenden werden bevorzugte Ausführungsformen der Erfindung anhand der Zeichnung näher beschrieben. Dabei zeigt
Fig. 1 eine Ausführungsform einer erfindungsgemäßen Trennvorrichtung,
Fig. 2 eine erfindungsgemäße Trennvorrichtung in schematischer Darstellung.

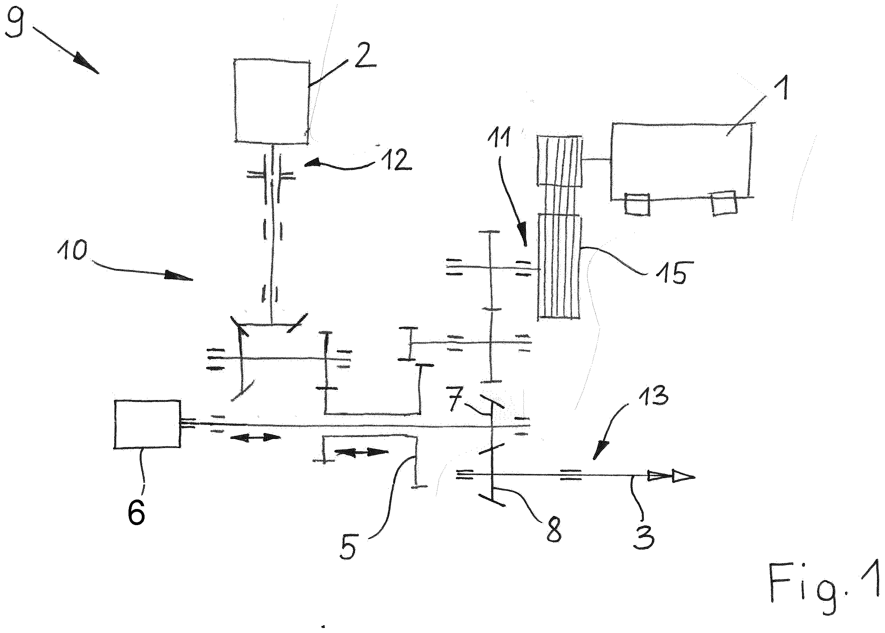

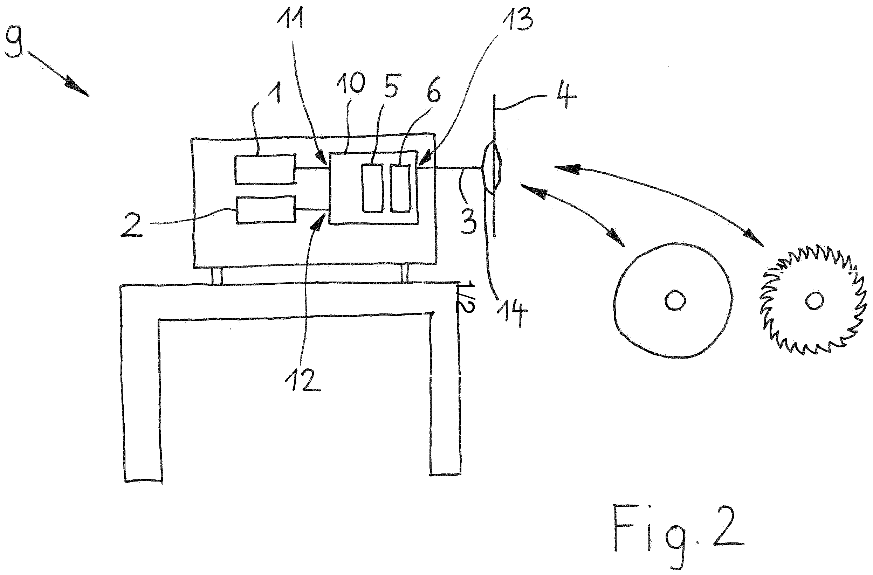

Fig. 1 zeigt eine Vorrichtung 9 zum Durchtrennen von Werkstücken oder Bauteilen. Diese hat ein Getriebe 10 mit einem ersten Getriebeeingang 11, einem zweiten Getriebeeingang 12 und einem Getriebeausgang 13. Ein erster Antrieb 1 ist mit dem ersten Getriebeeingang 11 und ein zweiter Antrieb 2 ist mit dem zweiten Getriebeeingang 12 verbunden. Ein Abtrieb 3 ist mit dem Getriebeausgang 13 verbundenen und dient zur Übertragung der Drehbewegung auf ein Trennwerkzeug 4 (Fig. 2).

Das Getriebe 10 weist eine Schalteinrichtung 5 auf, die den Getriebeausgang 13 in einer ersten Stellung mit dem ersten Getriebeeingang 11 und in einer zweiten Stellung (in Fig. 1 dargestellt) mit dem zweiten Getriebeeingang 12 koppelt. Die Schalteinrichtung 5 besteht im gezeigten Ausführungsbeispiel aus zwei Zahnrädern, die gemeinsam gemäß dem in Fig. 1 bei der Schalteinrichtung 5 eingezeichneten Doppelpfeil axial verschiebbar sind. Durch axiales Verschieben kann zwischen dem ersten Antrieb 1 und dem zweiten Antrieb 2 umgeschaltet werden, indem ein erstes der beiden Zahnräder mit einem Zahnrad des ersten Getriebeeinganges 11 in Eingriff oder aus dem Eingriff gebracht wird, und ein zweites der beiden Zahnräder mit einem Zahnrad des zweiten Getriebeeinganges 12 aus dem Eingriff oder in Eingriff gebracht wird.

Zusätzlich weist die Vorrichtung 9 eine Spieleinstelleinrichtung 6 zur Einstellung des Spiels in der Drehübertragung zwischen zumindest einem der Antriebe 1, 2 und dem Abtrieb 3 auf, die in weiterer Folge erläutert werden soll. Die Spieleinstelleinrichtung 6 wird im gezeigten Ausführungsbeispiel durch zwei miteinander kämmende Zahnräder 7, 8 gebildet, wobei zur Einstellung des Spiels in der Drehübertragung eines der Zahnräder 7 relativ zum anderen Zahnrad 8 axial verschiebbar ist, was durch den bei der Spieleinstellung 6 eingezeichneten Doppelpfeil in Fig. 1 angedeutet wird. Die Drehachsen der kämmenden Zahnräder 7, 8 stehen dabei parallel zueinander. Dabei können die kämmenden Zahnräder 7, 8 jeweils eine konische Verzahnung aufweisen (wie in Fig. 1 angedeutet), oder es kann zumindest eines der Zahnräder 7, 8 eine sich in axialer Richtung verändernde Verzahnung aufweisen. Ein Stellglied der Spieleinstelleinrichtung 6, das z.B. hydraulisch, pneumatisch, elektrisch, mechanisch oder elektro-mechanisch betätigbar ist, dient zur axialen Verschiebung der beiden kämmenden Zahnräder 7, 8.

In einer ersten Betriebsart (Sägen) wird als Trennwerkzeug 4 eine Kreissäge verwendet. Die Schalteinrichtung 5 wird in die erste Stellung gebracht und die Spieleinstelleinrichtung 6 wird in eine spielarme, vorzugsweise spielfreie Stellung gebracht. In einer zweiten Betriebsart (Trennschleifen) wird als Trennwerkzeug 4 eine Trennschleifscheibe verwendet. Die Schalteinrichtung 5 wird in die zweite Stellung gebracht und die Spieleinstelleinrichtung 6 wird in eine Stellung gebracht, in der das Spiel größer ist als in der ersten Betriebsart.

Das Übersetzungsverhältnis zwischen dem ersten Antrieb 1 (hier: der Sägeantrieb) und dem Abtrieb 3 und das Übersetzungsverhältnis zwischen dem zweiten Antrieb 2 (hier: der Trennschleifantrieb) und dem Abtrieb 3 sind vorzugsweise um einen Faktor von zumindest 10 voneinander verschieden. Dadurch werden im Falle des Sägens geringere Drehzahlen erreicht als beim Trennschleifen. Die Drehzahlen des ersten Antriebs 1 können durch einen dem Getriebe 10 vorgeschalteten Riementrieb 15 angepasst und durch das Getriebe 10 weiter verringert werden.

Der Abtrieb 3 ist mit einer Werkzeughalterung 14, vorzugsweise in Form eines Spannflansches, verbunden und kann wie erwähnt z.B. eine Kreissäge und eine Trennschleifscheibe als Trennwerkzeug 4 tragen (Fig. 2).

Vorzugsweise weist die Vorrichtung 9 ferner eine Kühl- und/oder Schmiereinrichtung (in den Fig. 1 und 2 nicht dargestellt) auf, die als bauliche Einheit abnehmbar oder aus dem Arbeitsbereich der Vorrichtung 9 bzw. von dem Trennwerkzeug wegbewegbar ist.

Fig. 2 zeigt des Weiteren eine Plattform, auf der die Vorrichtung 9 gelagert und vorzugsweise durch zusätzliche Antriebe verfahrbar ist.

Beim Verfahren zum Durchtrennen von Werkstücken oder Bauteilen mit einer erfindungsgemäßen Vorrichtung 9 wird zunächst die entsprechende Betriebsart gewählt (Sägen oder Trennschleifen). Dabei wird die Schalteinrichtung 5 in die erste Stellung (Sägen) oder zweite Stellung (Trennschleifen) gebracht. Beim Sägen wird die Spieleinstelleinrichtung 6 spielarm bzw. spielfrei geschaltet. Beim Trennschleifen wird die Spieleinstelleinrichtung 6 so geschaltet, dass ausreichendes Spiel in der Drehübertragung vorhanden ist, jedenfalls aber größeres Spiel als beim Sägen.

Die Erfindung stellt somit eine Trennvorrichtung bereit, mittels derer die Umstellung von einer Trenntechnologie auf eine andere Trenntechnologie, beispielsweise vom Trennschleifen auf das Sägen, wesentlich schneller und kostengünstiger erfolgen kann, wobei die Vorteile der einzelnen Trenntechnologien beibehalten werden können.

## Patentansprüche

1. Vorrichtung (9) zum Durchtrennen von Werkstücken oder Bauteilen umfassend
- ein Getriebe (10) mit einem ersten Getriebeeingang (11) und einem Getriebeausgang (13),
- einen ersten Antrieb (1), der mit dem ersten Getriebeeingang (11) verbunden ist, und
- einen mit dem Getriebeausgang (13) verbundenen Abtrieb (3) zur Übertragung einer Drehbewegung auf ein Trennwerkzeug (4),
**dadurch gekennzeichnet, dass** das Getriebe (10) einen zweiten Getriebeeingang (12) umfasst, der mit einem zweiten Antrieb (2) verbunden ist,
sowie eine Schalteinrichtung (5), die den Getriebeausgang (13) in einer ersten Stellung mit dem ersten Getriebeeingang (11) und in einer zweiten Stellung mit dem zweiten Getriebeeingang (12) koppelt,
wobei eine Spieleinstelleinrichtung (6) zur Einstellung des Spiels in der Drehübertragung zwischen zumindest einem der Antriebe (1, 2) und dem Abtrieb (3) vorgesehen ist.

2. Vorrichtung (9) nach Anspruch 1, **dadurch gekennzeichnet, dass** in einer ersten Betriebsart der Vorrichtung (9) das Trennwerkzeug (4) eine Kreissäge ist, die Schalteinrichtung (5) sich in der ersten Stellung befindet und die Spieleinstelleinrichtung (6) eine spielarme, vorzugsweise spielfreie Stellung einnimmt, und dass in einer zweiten Betriebsart der Vorrichtung (9) das Trennwerkzeug (4) eine Trennschleifscheibe ist, die Schalteinrichtung (5) sich in der zweiten Stellung befindet und die Spieleinstelleinrichtung (6) eine Stellung einnimmt, in der das Spiel größer ist als in der ersten Betriebsart.

3. Vorrichtung nach Anspruch 1 oder 2, **dadurch gekennzeichnet, dass** das Übersetzungsverhältnis zwischen dem ersten Antrieb (1) und dem Abtrieb (3) und das Übersetzungsverhältnis zwischen dem zweiten Antrieb (2) und dem Abtrieb (3) um einen Faktor von zumindest 10, vorzugsweise zumindest 20, voneinander verschieden sind.

4. Vorrichtung nach einem der vorhergehenden Ansprüche, **dadurch gekennzeichnet, dass** zumindest zwei miteinander kämmende Zahnräder (7, 8) mit zueinander paralleler Drehachsen vorgesehen sind, wobei eines der Zahnräder (7) relativ zum anderen Zahnrad (8) axial verschiebbar ist, und die Spieleinstelleinrichtung (6) ein Stellglied zur axialen Verschiebung eines der Zahnräder (7) relativ zum anderen Zahnrad (8) zur Einstellung des Spiels umfasst.

5. Vorrichtung nach Anspruch 4, **dadurch gekennzeichnet, dass** die kämmenden Zahnräder (7, 8) jeweils eine konische Verzahnung aufweisen, oder dass zumindest eines der Zahnräder (7, 8) eine sich in axialer Richtung verändernde Verzahnung aufweist.

6. Vorrichtung nach einem der vorhergehenden Ansprüche, **dadurch gekennzeichnet, dass** der Abtrieb (3) mit einer Werkzeughalterung (14), vorzugsweise in Form eines Spannflansches, verbunden ist, und dass das von der Werkzeughalterung (14) gehaltene Trennwerkzeug (4) eine Kreissäge oder eine Trennschleifscheibe ist.

7. Vorrichtung nach einem der vorhergehenden Ansprüche, **dadurch gekennzeichnet, dass** die Vorrichtung (9) eine Kühl- und/oder Schmiereinrichtung aufweist, die als Einheit abnehmbar oder aus dem Arbeitsbereich bzw. von dem Trennwerkzeug (4) der Vorrichtung (9) wegbewegbar ist.

## Claims

1. Device (9) for separating workpieces or components, comprising
- a transmission (10) having a first transmission input (11) and a transmission output (13),
- a first drive (1) connected to the first transmission input (11), and
- an output (3) connected to the transmission output (13) for transmitting a rotary movement to a separating tool (4),
**characterized in that** the transmission (10) comprises a second transmission input (12) which is connected to a second drive (2), and a switching device (5) which couples the transmission output (13) to the first transmission input (11) in a first position and to the second transmission input (12) in a second position, wherein a play adjusting device (6) is provided for adjusting the play in the rotary transmission between at least one of the drives (1, 2) and the output (3).

2. Device (9) according to claim 1, **characterized in that** in a first operating mode of the device (9), the separating tool (4) is a circular saw, the switching device (5) is in the first position and the play adjusting device (6) assumes a low-play, preferably play-free, position, and that, in a second operating mode of the device (9), the separating tool (4) is an abrasive cutting wheel, the switching device (5) is in the second position and the play adjusting device (6) has a position in which the play is greater than in the first operating mode.

3. Device according to claim 1 or 2, **characterized in that** the transmission ratio between the first drive (1) and the output (3) and the transmission ratio between the second drive (2) and the output (3) are different from one another by a factor of at least 10, preferably at least 20.

4. Device according to one of the preceding claims, **characterized in that** at least two gear wheels (7, 8) meshing with one another are provided with mutually parallel axes of rotation, wherein one of the gear wheels (7) is axially displaceable relative to the other gear wheel (8), and the play adjusting device (6) comprises an actuating member for axially displacing one of the gear wheels (7) relative to the other gear wheel (8) to adjust the play.

5. Device according to claim 4, **characterized in that** the meshing gear wheels (7, 8) each have a conical toothing, or that at least one of the gear wheels (7, 8) has a toothing which changes in the axial direction.

6. Device according to one of the preceding claims, **characterized in that** the output (3) is connected to a tool holder (14), preferably in the form of a clamping flange, and that the separating tool (4) held by the tool holder (14) is a circular saw or an abrasive cutting wheel.

7. Device according to one of the preceding claims, **characterized in that** the device (9) comprises a cooling and/or lubricating device, which can be removed as a unit or moved away from the working area or from the separating tool (4) of the device (9).

## Revendications

1. Dispositif (9) pour découper des pièces ou des composants, comprenant
- un engrenage (10) avec une première entrée d'engrenage (11) et une sortie d'engrenage (13),
- un premier entraînement (1) relié à la première entrée d'engrenage (11) et
- un arbre secondaire (3) relié à la sortie d'engrenage (13) pour transmettre un mouvement rotatif à un outil de découpe (4),
**caractérisé en ce que** l'engrenage (10) comprend une deuxième entrée d'engrenage (12) qui est reliée à un deuxième entraînement (2),
ainsi qu'une installation de changement de rapport (5) qui couple la sortie d'engrenage (13) à la première entrée d'engrenage (11) dans une première position et à la deuxième entrée d'engrenage (12) dans une deuxième position,
une installation d'ajustement du jeu (6) étant prévue pour ajuster le jeu dans la transmission de la rotation entre au moins un des entraînements (1, 2) et l'arbre secondaire (3).

2. Dispositif (9) selon la revendication 1, **caractérisé en ce que** dans un premier mode de fonctionnement du dispositif (9), l'outil de découpe (4) est une scie circulaire, l'installation de changement de rapport (5) se trouve dans la première position et l'installation d'ajustement du jeu (6) prend une position de jeu réduit, de préférence sans jeu,
et **en ce que** dans un deuxième mode de fonctionnement du dispositif (9), l'outil de découpe (4) est une meule tronçonneuse, l'installation de changement de rapport (5) se trouve dans la deuxième position et l'installation d'ajustement du jeu (6) prend une position dans laquelle le jeu est plus grand que dans le premier mode de fonctionnement.

3. Dispositif selon la revendication 1 ou 2, **caractérisé en ce que** le rapport de multiplication entre le premier entraînement (1) et l'arbre secondaire (3) et le rapport de multiplication entre le deuxième entraînement (2) et l'arbre secondaire (3) diffèrent d'un facteur d'au moins 10, de préférence d'au moins 20.

4. Dispositif selon l'une des revendications précédentes, **caractérisé en ce que** sont prévues au moins deux roues dentées (7, 8) engrenées entre elles, avec des axes de rotation parallèles, l'une des roues dentées (7) étant déplaçable dans le sens axial par rapport à l'autre roue dentée (8), et l'installation d'ajustement du jeu (6) comprend un organe d'ajustement pour déplacer l'une des roues dentées (7) dans le sens axial par rapport à l'autre roue dentée (8) afin d'ajuster le jeu.

5. Dispositif selon la revendication 4, **caractérisé en ce que** les roues dentées (7, 8) engrenées présentent chacune une denture conique ou **en ce qu'**au moins une des roues dentées (7, 8) présente une denture qui se modifie dans le sens axial.

6. Dispositif selon l'une des revendications précédentes, **caractérisé en ce que** l'arbre secondaire (3) est relié à une fixation d'outil (14), de préférence une bride de serrage, et **en ce que** l'outil de découpe (4) retenu par la fixation d'outil (14) est une scie circulaire ou une meule tronçonneuse.

7. Dispositif selon l'une des revendications précédentes, **caractérisé en ce que** le dispositif (9) comprend une installation de refroidissement et/ou de lubrification qui peut être enlevé d'un bloc ou écarté de la zone de travail ou de l'outil de découpe (4) du dispositif (9).
